# EUROPEAN PATENT SPECIFICATION

(11) **EP 3 756 912 B1**
(45) Date of publication and mention of the grant of the patent: **07.06.2023**
(21) Application number: 19211359.5
(22) Date of filing: 25.11.2019
(51) Int. Cl.: B60G 11/30, B62K 5/027, B62J 45/412, B62K 5/08, B62K 5/10, B62J 45/415, B60G 17/017, B62K 5/00, B62K 25/04

(54) **TWO-WHEEL AUTOMATIC BALANCE RESET MECHANISM AND SYSTEM**
MECHANISMUS UND SYSTEM ZUR AUTOMATISCHEN ZWEIRADGLEICHGEWICHTSRÜCKSETZUNG
MÉCANISME DE RÉINITIALISATION D'ÉQUILIBRE AUTOMATIQUE À DEUX ROUES ET SYSTÈME

(30) Priority: 25.06.2019 CN 201920967476 U; 11.09.2019 CN 201910860059; 11.09.2019 CN 201921516793 U
(43) Date of publication of application: 30.12.2020
(73) Proprietor: Zheng, Julian, Taizhou City, Zhejiang (CN)
(72) Inventor: Zheng, Julian, Taizhou City, Zhejiang (CN)
(74) Representative: Cleanthous, Marinos

(56) References cited:
- EP-A1- 3 357 720
- EP-A1- 3 434 570
- FR-A1- 2 953 184
- US-B2- 7 665 742

## Description

### BACKGROUND

### Technical Field

The present invention belongs to the technical field of two-wheel vehicles, and specifically relates to a two-wheel automatic balance reset mechanism and system.

### Related Art

The invention with Chinese Patent Application No. 200910254181.X discloses an overturn preventing device for a vehicle with two front wheels. The vehicle with the two front wheels comprises a frame with a hollow positioning piece, a front wheel unit corresponding to the positioning piece, and a steering unit used for controlling the front wheel unit. The overturn preventing device comprises a tilting unit pivoted to the positioning piece, and a locking unit used for locking the tilting unit, the locking unit is provided with a hydraulic locking mechanism integrated on the tilting unit, and the tilting unit is controlled to tilt relative to the positioning piece through the hydraulic locking mechanism such that the tilting unit is locked in time to avoid the overturn of the vehicle with the two front wheels caused by the tilting of the tilting unit relative to the positioning piece.

After the vehicle stops, a rider needs to adjust the vehicle by self in order to restore the vertical state of the vehicle, which is laborious and time-consuming; and if not adjusting the vehicle, the rider is very uncomfortable on the tilted vehicle.

US7665742 discloses a two-wheel automatic balance reset mechanism with all the features of the preamble of independent claim 1.

### Summary

An objective of the present invention is to provide a simply structured, safe and comfortable two-wheel automatic balance reset mechanism and system.

The objective of the present invention is achieved as follows:
the two-wheel automatic balance reset mechanism comprises a frame, a main vertical tube is fixedly arranged at the front end of the frame, a handlebar rod is rotationally arranged in the main vertical tube, front wheel supports are symmetrically arranged on two sides of the main vertical tube, a balance bar is hinged between the frame and each front wheel support, the balance bar comprises a piston cylinder and a piston rod, the piston rod is movably arranged in a piston chamber of the piston cylinder, two ends of the piston chamber are mutually interconnected to form a first channel, a main control valve is arranged on the first channel and divides the first channel into a medium intake end and a backflow end, a medium tank is arranged at the backflow end, a pump is arranged at the medium intake end, and the pump is interconnected with the medium tank.

Preferably, the backflow ends of the two balance bars are connected with the same medium tank while the medium intake ends thereof are connected with the pump respectively through a left filling valve and a right filling valve.

Preferably, an energy storage tank is arranged between the left filling valve/the right filling valve and the pump, and a pressure sensor is arranged on the energy storage tank.

Preferably, the pump is driven by a motor, and a check valve is arranged at a liquid outlet end of the pump.

Preferably, the front wheel support comprises a main rod, a rotating seat and a damper, the damper is rotationally arranged at the lower end of the main rod through the rotating seat, the main vertical tube is respectively hinged with the main rods through swing arm assemblies, a steering assembly is arranged between the handlebar rod and each rotating seat, and a front wheel is arranged at the lower end of the damper.

Preferably, the swing arm assembly comprises a plurality of swing arms and first rotating pins, and two ends of the swing arm are respectively arranged on the main rod through the first rotating pins.

Preferably, a group of symmetric swing arms are fixedly connected with a connecting plate, and a connecting rod is hinged between the two connecting plates.

Preferably, a main rotating component is hinged at the bottom of the handlebar rod, a secondary rotating component is hinged at each rotating seat, and a steering arm is hinged between the main rotating component and each secondary rotating component.

Preferably, the piston chamber and an interconnected chamber are arranged in the piston cylinder, and upper ends of the piston chamber and the interconnected chamber are mutually interconnected through a normally opened main control valve while lower ends thereof are mutually interconnected through an interconnected pore.

Preferably, the piston chamber, an inner chamber of the main control valve, the interconnected chamber and the interconnected pore form the first channel, when the vehicle normally runs, the main control valve is normally opened, a medium randomly moves in the first channel, and the piston rod moves along with the movement of corresponding front wheel; when the vehicle is tilted, the main control valve is controlled to be switched off, the piston rod is locked such that a steering structure of the vehicle is locked.

A two-wheel automatic balance reset system comprises the two-wheel automatic balance reset mechanism and a control system, the control system comprises a main control module and an acquisition module, the acquisition module comprises a balance sensor arranged on the frame and a speed sensor.

Compared with the prior art, the present invention has the following outstanding and beneficial technical effects:
the main control valve of the present invention achieves locking of the balance bars, and when the vehicle is tilted, the pump drives the balance bars to achieve automatic reset of the frame and quickly adjust the vehicle and the position of a rider such that the rider rides the vehicle more safely and comfortably; and
the present invention acquires a vehicle speed by the speed sensor and acquires a position of the vehicle through the balance sensor to automatically controlling the state of the vehicle in real time so as to have the characteristics of simple structure, high efficiency, convenience in use and the like.

### Brief Description of Drawings

To describe the technical solutions in the embodiments of the present invention more clearly, the following briefly introduces the accompanying drawings required for describing the embodiments. Apparently, the accompanying drawings in the following description show merely some embodiments in the present invention, and a person of ordinary skill in the art may still derive other drawings from these accompanying drawings without creative efforts, wherein
FIG. 1 is a front structural view of the present invention;
FIG. 2 is a back structural view of the present invention;
FIG. 3 is a schematic structural diagram after a steering mechanism is removed from the present invention;
FIG. 4 is a schematic structural diagram of a steering mechanism of the present invention;
FIG. 5 is a partially enlarged view of a steering mechanism of the present invention;
FIG. 6 is a schematic diagram of a first embodiment of the present invention;
FIG. 7 is a schematic diagram of a first embodiment of the present invention.

In the drawings: 1-frame, 2-swing arm assembly, 3-front wheel support, 4-front wheel, 5-steering assembly, 6-balance bar, 11-main vertical tube, 12-handlebar rod, 7-mounting rack, 21-swing arm, 22-first rotating pin, 23- connecting plate, 24-connecting rod, 31-main rod, 32-rotating seat, 33-damper, 34-main rotating component, 35-secondary rotating component, 36-steering arm, 41-medium tank, 42-pump, 43-left filling valve, 44-right filling valve, 45-energy storage tank, 46-pressure sensor, 47-motor, 48-check valve, 49-balance sensor, 61-piston cylinder, 62-piston rod, 63-piston cylinder, 64-main control valve, 65-medium intake end, 66-backflow end, 67-interconnected chamber, and 68-interconnected pore.

### Description of Embodiments

The following further describes the present invention with reference to specific embodiments.

### Embodiment 1

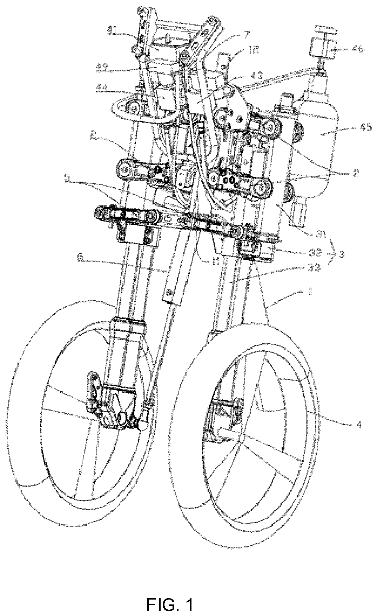

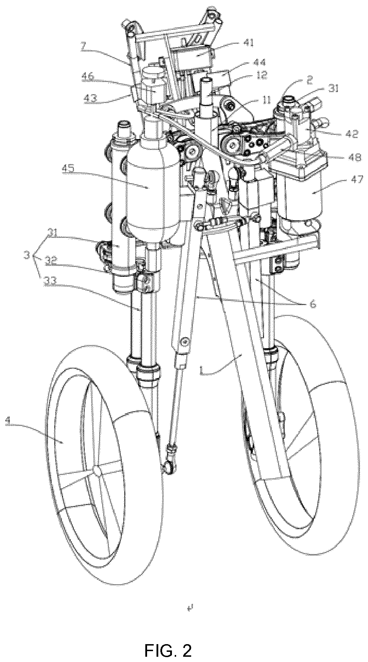

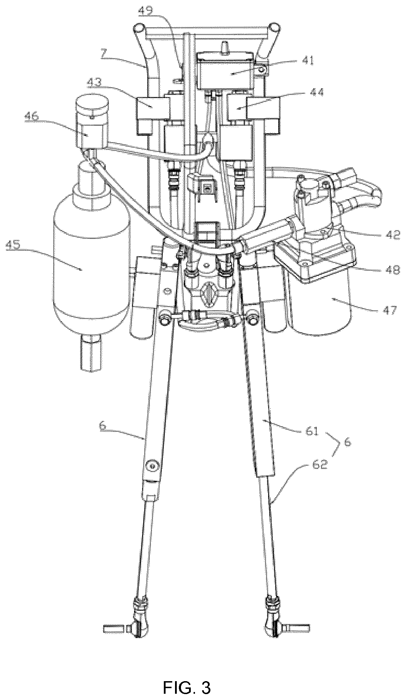

As shown in FIG. 1 to FIG. 4, a two-wheel automatic balance reset system comprises a two-wheel automatic balance reset mechanism and a control system, the two-wheel automatic balance reset mechanism comprises a frame 1, a main vertical tube 11 is fixedly arranged at the front end of the frame 1, a handlebar rod 12 is rotationally arranged in the main vertical tube 11, front wheel supports 3 are symmetrically arranged on two sides of the main vertical tube 11, a balance bar 6 is hinged between the frame 1 and each front wheel support 3, and the balance bar 6 is hinged with the frame and the front wheel support through ball connectors so as to facilitate movement of the balance bar 6 when the vehicle turns. The balance bar 6 comprises a piston cylinder 61 and a piston rod 62, the piston chamber 63 and an interconnected chamber 67 are arranged in the piston cylinder 61, the piston rod 62 is movably arranged in the piston chamber 63, and the upper ends of the piston chamber 63 and the interconnected chamber 67 are mutually interconnected through a normally opened main control valve 64 while the lower ends thereof are mutually interconnected through an interconnected pore 68. The piston chamber 63, an inner chamber of the main control valve 64, the interconnected chamber 67 and the interconnected pore 68 form a first channel, and when the vehicle normally runs, the main control valve 64 is normally opened, a medium randomly moves in the first channel, and the piston rod 62 moves along with the movement of a front wheel. When the vehicle is tilted, the main control valve 64 is controlled to be switched off, and the piston rod 62 is locked such that a steering structure of the vehicle is locked.

The main control valve 64 divides the first channel into a medium intake end 65 and a backflow end 66, a medium tank 41 is arranged at the backflow end 66, a breathing valve and a filling opening are arranged on the medium tank 41, and when the medium is liquid, the medium is filled through the filling opening. A pump 42 is arranged at the medium intake end 65, the pump 42 is driven by a motor 47, and a check valve 48 is arranged at a liquid outlet end of the pump to prevent backflow. A liquid inlet end of the pump 42 is interconnected with the medium tank 41, and the medium can be hydraulic oil or gas, preferably the hydraulic oil, because the hydraulic oil has a low sealing requirement, is not easy to leak and has high control accuracy. At this time, the medium tank 41 is a transparent oil tank with a liquid storage scale helping the rider to observe and supplement the amount of the medium.

In order to control the cost and the size, the backflow ends 66 of the two balance bars 6 are connected with the same medium tank 41, the medium intake ends 65 of the two balance bars 6 are respectively connected with the pump 42 through a left filling valve 43 and a right filling valve 44, the left filling valve 43 and the right filling valve 44 are normally closed and are mounted on a mounting rack 7 at the front of the frame, an energy storage tank 45 is arranged between the left filling valve 43/the right filling valve 44 and the pump 42, and a pressure sensor 46 is arranged on the energy storage tank 45. When the whole vehicle is powered on, the pressure sensor can sense the internal pressure change of the energy storage tank, and when the pressure is reduced to a certain value, the motor and the pump are started to pressurize the energy storage tank in order to store the energy. At a high pressure state, the balance bars can be directly driven to operate to prevent influence on the service life caused by frequent operation of the motor and the pump. The pressure generated by once operation of the motor and the pump can be used by the balance bars for ten times, and if frequent starting of the motor and the pump is not considered, the energy storage tank 45 and the pressure sensor 46 can be removed.

The control system comprises a main control module and an acquisition module, the acquisition module comprises a balance sensor 49 arranged on the frame 1 and a speed sensor arranged on the front wheel support 3 or other position of the vehicle, the balance sensor 49 may be an electronic gyroscope sensor or other device capable of sensing the balance of a vehicle body; and the main control module controls the main control valve 64, the motor 47, the left filling valve 43 and the right filling valve 44 to operate.

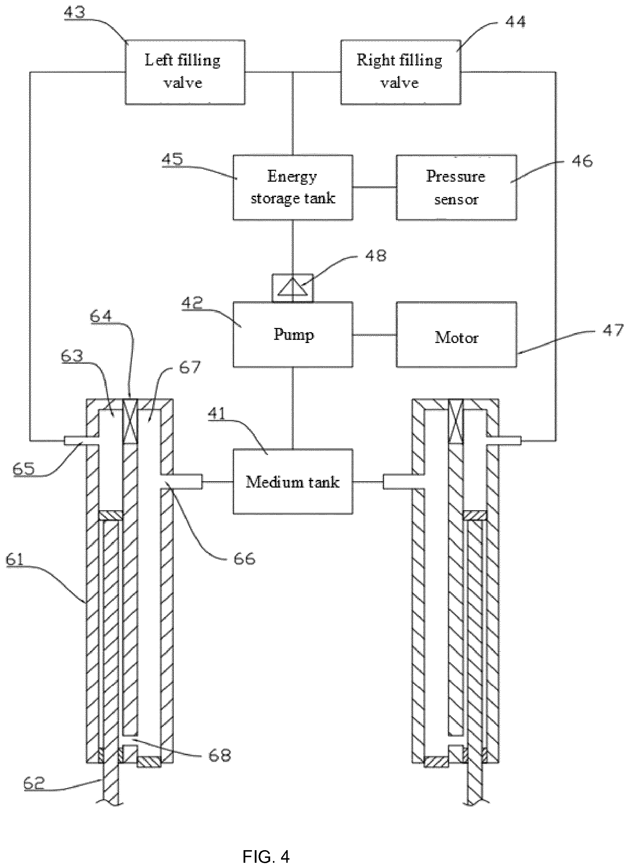

The automatic balance reset principle is as follows:
as shown in FIG. 4, when the speed sensor detects that the vehicle speed is equal to 0 or a certain preset vehicle speed, the main control module starts the balance sensor 49, and the balance sensor 49 senses a position of the vehicle body and transmits a signal to the main control module;
if the vehicle body is located at a balance position, the balance sensor 49 transmits a signal to the main control module, and the main control module transmits an instruction to power the main control valves 64 on the balance bars 6 such that the piston rods 62 of the balance bars 6 cannot move up and down to keep a balance state;
if the vehicle body is tilted to the left side, the main control valve 64 on the left side is switched off, the left filling valve 43 is switched on, the energy storage tank drives the balance bar 6 on the left side to stretch out till the balance sensor 49 senses that the vehicle body is located at a horizontal position, the main control valve 64 on the right side and the left filling valve 43 on the left side are switched off, and the vehicle body keeps the balance state; and if the vehicle body is tilted to the right side, the main control valve 64 on the right side is switched off, the right filling valve 44 is switched on, the energy storage tank drives the balance bar 6 on the right side to stretch out till the balance sensor 49 senses that the vehicle body is located at the horizontal position, the main control valve 64 on the left side and the right filling valve 44 on the right side are switched off, and the vehicle body keeps the balance state.

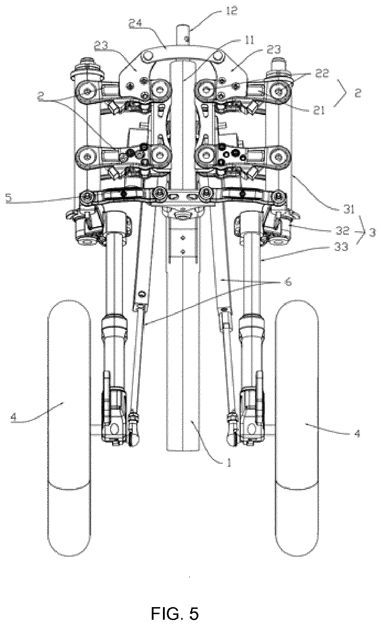

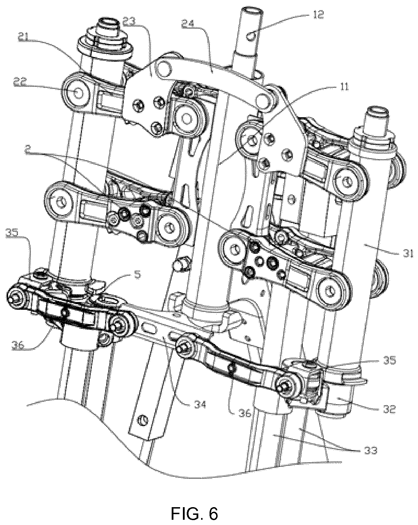

The following specifically introduces the steering structure of the two-wheel vehicle: as shown in FIG. 5 and FIG. 6, the front wheel support 3 comprises a main rod 31, a rotating seat 32 and a damper 33, a front wheel 4 is arranged at the lower end of the damper 33, the upper end of the damper 33 is rotationally arranged at the lower end of the main rod 31 through the rotating seat 32, the main vertical tube 11 is respectively hinged with the main rods 31 through swing arm assemblies 2, the swing arm assembly 2 comprises four swing arms 21 and eight first rotating pins 22, and two ends of the swing arm 21 are respectively arranged on the main rod 31 through the first rotating pins 22. A first group of the swing arms 21 are fixedly connected with a connecting plate 23, and a connecting rod 24 is hinged between the two connecting plates 23. A steering assembly 5 is arranged between the handlebar rod 12 and each rotating seat 32, a main rotating component 34 capable of rotating left and right is hinged at the bottom of the handlebar rod 12, a secondary rotating component 35 capable of rotating left and right is hinged at each rotating seat 32, and a steering arm 36 capable of rotating up and down is hinged between the main rotating component 34 and each secondary rotating component 35.

### Embodiment 2

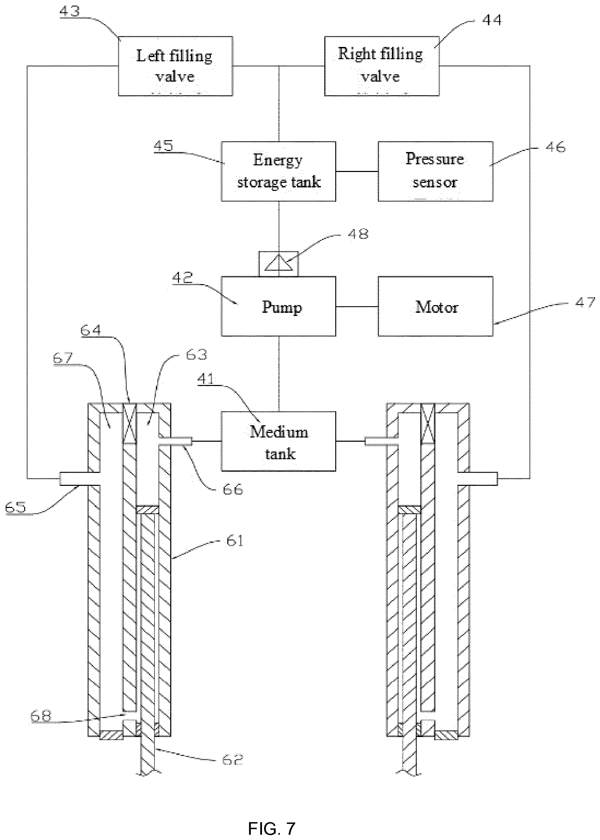

Embodiment 1 and Embodiment 2 are basically the same, and their difference is: the balance bar is reversely mounted, that is, and the medium intake end of the balance bar is interconnected with a lower cavity of the piston chamber while the backflow end is interconnected with an upper cavity of the piston chamber. As shown in FIG. 7, the principle of Embodiment 2 is the same as that of Embodiment 1:
when the speed sensor detects that the vehicle speed is equal to 0 or a certain preset vehicle speed, the main control module starts the balance sensor 49, and the balance sensor 49 senses a position of the vehicle body and transmits a signal to the main control module;
if the vehicle body is located at a balance position, the balance sensor 49 transmits a signal to the main control module, and the main control module transmits an instruction to power the main control valves 64 on the balance bars 6 such that the piston rods 62 of the balance bars 6 cannot move up and down to keep a balance state;
if the vehicle body is tilted to the left side, the main control valve 64 on the left side is switched off, the left filling valve 43 is switched on, the energy storage tank drives the balance bar 6 on the left side to stretch out till the balance sensor 49 senses that the vehicle body is located at a horizontal position, the main control valve 64 on the right side and the left filling valve 43 on the left side are switched off, and the vehicle body keeps the balance state; and
if the vehicle body is tilted to the right side, the main control valve 64 on the right side is switched off, the right filling valve 44 is switched on, the energy storage tank drives the balance bar 6 on the right side to stretch out till the balance sensor 49 senses that the vehicle body is located at the horizontal position, the main control valve 64 on the left side and the right filling valve 44 on the right side are switched off, and the vehicle body keeps the balance state.

### Embodiment 3

Embodiment 3 and Embodiment 1 are basically the same, and their difference is: the balance bars of Embodiment 3 are independently controlled respectively through two pumps so as to omit two filling valves.

The above merely describes preferred embodiments of the present invention, but are not used to limit the protection scope of the present invention.

## Claims

1. A two-wheel automatic balance reset mechanism, comprising a frame (1), wherein a main vertical tube (11) is fixedly arranged at the front end of the frame (1), a handlebar rod (12) is rotationally arranged in the main vertical tube (11), and front wheel supports (3) are symmetrically arranged on two sides of the main vertical tube (11); and a balance bar (6) is hinged between the frame (1) and each front wheel support (3), the balance bar (6) comprises a piston cylinder (61) and a piston rod (62), the piston rod (62) is movably arranged in a piston chamber (63) of the piston cylinder (61), **characterized in that** two ends of the piston chamber (63) are mutually interconnected to form a first channel, a main control valve (64) is arranged on the first channel and divides the first channel into a medium intake end (65) and a backflow end (66), a medium tank (41) is arranged at the backflow end (66), a pump (42) is arranged at the medium intake end (65), and the pump (42) is interconnected with the medium tank (41).

2. The two-wheel automatic balance reset mechanism according to claim 1, wherein the backflow ends (66) of the two balance bars (6) are connected with the same medium tank (41) while the medium intake ends (65) thereof are connected with the pump (42) respectively through a left filling valve (43) and a right filling valve (44).

3. The two-wheel automatic balance reset mechanism according to claim 1, wherein an energy storage tank (45) is arranged between the left filling valve (43)/the right filling valve (44) and the pump (42), and a pressure sensor (46) is arranged on the energy storage tank (45).

4. The two-wheel automatic balance reset mechanism according to claim 1, 2 or 3, wherein the pump (42) is driven by a motor (47), and a check valve (48) is arranged at a liquid outlet end of the pump.

5. The two-wheel automatic balance reset mechanism according to claim 1, wherein the front wheel support (3) comprises a main rod (31), a rotating seat (32) and a damper (33), the damper (33) is rotationally arranged at the lower end of the main rod (31) through the rotating seat (32), the main vertical tube (11) is respectively hinged with the main rods (31) through swing arm assemblies (2), a steering assembly (5) is arranged between the handlebar rod (12) and each rotating seat (32), and a front wheel (4) is arranged at the lower end of the damper (33).

6. The two-wheel automatic balance reset mechanism according to claim 5, wherein the swing arm assembly (2) comprises a plurality of swing arms (21) and first rotating pins (22), and two ends of the swing arm (21) are respectively arranged on the main rod (31) through the first rotating pin (22).

7. The two-wheel automatic balance reset mechanism according to claim 6, wherein a group of symmetric swing arms (21) are fixedly connected with a connecting plate (23), and a connecting rod (24) is hinged between the two connecting plates (23).

8. The two-wheel automatic balance reset mechanism according to claim 1 or 5, wherein a main rotating component (34) is hinged at the bottom of the handlebar rod (12), a secondary rotating component (35) is hinged at each rotating seat (32), and a steering arm (36) is hinged between the main rotating component (34) and each secondary rotating component (35).

9. The two-wheel automatic balance reset mechanism according to claim 1, wherein the piston chamber (63) and an interconnected chamber (67) are arranged in the piston cylinder (61), and upper ends of the piston chamber (63) and the interconnected chamber (67) are mutually interconnected through a normally opened main control valve (64) while lower ends thereof are mutually interconnected through an interconnected pore (68).

10. The two-wheel automatic balance reset mechanism according to claim 9, wherein the piston chamber (63), an inner chamber of the main control valve (64), the interconnected chamber (67) and the interconnected pore (68) form the first channel, when the vehicle normally runs, the main control valve (64) is normally opened, a medium randomly moves in the first channel, and the piston rod (62) moves along with the movement of corresponding front wheel; when the vehicle is tilted, the main control valve (64) is controlled to be switched off, the piston rod (62) is locked such that a steering structure of the vehicle is locked.

11. A two-wheel automatic balance reset system, wherein the system comprises the two-wheel automatic balance reset mechanism according to any one of claims 1 to 10 and a control system, the control system comprises a main control module and an acquisition module, the acquisition module comprises a balance sensor (49) arranged on the frame (1) and a speed sensor.

## Patentansprüche

1. Automatischer Zweirad-Gleichgewichtsrücksetzungsmechanismus, umfassend einen Rahmen (1), wobei ein vertikales Hauptrohr (11) fest an dem vorderen Ende des Rahmens (1) angeordnet ist, eine Lenkerstange (12) drehbar in dem vertikalen Hauptrohr (11) angeordnet ist und Vorderradstützen (3) symmetrisch auf zwei Seiten des vertikalen Hauptrohrs (11) angeordnet sind; und ein Gleichgewichtsstab (6) zwischen dem Rahmen (1) und jeder Vorderradstütze (3) gelenkig angebracht ist, der Gleichgewichtsstab (6) einen Kolbenzylinder (61) und eine Kolbenstange (62) umfasst, die Kolbenstange (62) beweglich in einem Kolbenraum (63) des Kolbenzylinders (61) angeordnet ist, **dadurch gekennzeichnet, dass** zwei Enden des Kolbenraums (63) miteinander verbunden sind, um einen ersten Kanal zu bilden, ein Hauptsteuerventil (64) an dem ersten Kanal angeordnet ist und den ersten Kanal in ein Medieneintrittsende (65) und ein Rücklaufende (66) teilt, ein Medientank (41) an dem Rücklaufende (66) angeordnet ist, eine Pumpe (42) an dem Medieneintrittsende (65) angeordnet ist und die Pumpe (42) mit dem Medientank (41) verbunden ist.

2. Automatischer Zweirad-Gleichgewichtsrücksetzungsmechanismus nach Anspruch 1, wobei die Rücklaufenden (66) der zwei Gleichgewichtsstäbe (6) mit dem gleichen Medientank (41) verbunden sind, während die Medieneintrittsenden (65) davon mit der Pumpe (42) jeweils durch ein linkes Füllventil (43) und ein rechtes Füllventil (44) verbunden sind.

3. Automatischer Zweirad-Gleichgewichtsrücksetzungsmechanismus nach Anspruch 1, wobei ein Energiespeichertank (45) zwischen dem linken Füllventil (43)/dem rechten Füllventil (44) und der Pumpe (42) angeordnet ist und ein Drucksensor (46) an dem Energiespeichertank (45) angeordnet ist.

4. Automatischer Zweirad-Gleichgewichtsrücksetzungsmechanismus nach Anspruch 1, 2 oder 3, wobei die Pumpe (42) durch einen Motor (47) angetrieben wird und ein Rückschlagventil (48) an einem Flüssigkeitsauslassende der Pumpe angeordnet ist.

5. Automatischer Zweirad-Gleichgewichtsrücksetzungsmechanismus nach Anspruch 1, wobei die Vorderradstütze (3) eine Hauptstange (31), einen Drehsitz (32) und einen Dämpfer (33) umfasst, wobei der Dämpfer (33) drehbar an dem unteren Ende der Hauptstange (31) durch den Drehsitz (32) angeordnet ist, das vertikale Hauptrohr (11) jeweils an den Hauptstangen (31) durch Schwenkarmanordnungen (2) gelenkig angebracht ist, eine Lenkanordnung (5) zwischen der Lenkerstange (12) und jedem Drehsitz (32) angeordnet ist und ein Vorderrad (4) an dem unteren Ende des Dämpfers (33) angeordnet ist.

6. Automatischer Zweirad-Gleichgewichtsrücksetzungsmechanismus nach Anspruch 5, wobei die Schwenkarmanordnung (2) eine Vielzahl von Schwenkarmen (21) und erste Drehstifte (22) umfasst und zwei Enden des Schwenkarms (21) jeweils an der Hauptstange (31) durch den ersten Drehstift (22) angeordnet sind.

7. Automatischer Zweirad-Gleichgewichtsrückstellmechanismus nach Anspruch 6, wobei eine Gruppe symmetrischer Schwenkarme (21) fest mit einer Verbindungsplatte (23) verbunden ist und eine Verbindungsstange (24) zwischen den zwei Verbindungsplatten (23) gelenkig angebracht ist.

8. Automatischer Zweirad-Gleichgewichtsrücksetzungsmechanismus nach Anspruch 1 oder 5, wobei eine Hauptdrehkomponente (34) an der Unterseite der Lenkerstange (12) gelenkig angebracht ist, eine sekundäre Drehkomponente (35) an jedem Drehsitz (32) gelenkig angebracht ist und ein Lenkarm (36) gelenkig zwischen der Hauptdrehkomponente (34) und jeder sekundären Drehkomponente (35) gelenkig angebracht ist.

9. Automatischer Zweirad-Gleichgewichtsrücksetzungsmechanismus nach Anspruch 1, wobei der Kolbenraum (63) und ein verbundener Raum (67) in dem Kolbenzylinder (61) angeordnet sind und obere Enden des Kolbenraums (63) und der verbundene Raum (67) miteinander durch ein normalerweise geöffnetes Hauptsteuerventil (64) verbunden sind, während untere Enden davon miteinander durch eine verbundene Öffnung (68) verbunden sind.

10. Automatischer Zweirad-Gleichgewichtsrücksetzungsmechanismus nach Anspruch 9, wobei der Kolbenraum (63), ein innerer Raum des Hauptsteuerventils (64), der verbundene Raum (67) und die verbundene Öffnung (68) den ersten Kanal bilden, wenn das Fahrzeug normal fährt, das Hauptsteuerventil (64) normalerweise geöffnet ist, sich ein Medium zufällig in dem ersten Kanal bewegt und sich die Kolbenstange (62) zusammen mit der Bewegung des entsprechenden Vorderrads bewegt; wenn das Fahrzeug geneigt ist, das Hauptsteuerventil (64) so gesteuert wird, dass es abgeschaltet ist, die Kolbenstange (62) verriegelt ist, sodass eine Lenkstruktur des Fahrzeugs verriegelt ist.

11. Automatisches Zweirad-Gleichgewichtsrücksetzungsmechanismus, wobei das System den automatischen Zweirad-Gleichgewichtsrücksetzungsmechanismus nach einem der Ansprüche 1 bis 10 und ein Steuersystem umfasst, wobei das Steuersystem ein Hauptsteuermodul und ein Erfassungsmodul umfasst, das Erfassungsmodul einen Gleichgewichtssensor (49), der am Rahmen (1) angeordnet ist, und einen Geschwindigkeitssensor umfasst.

## Revendications

1. Mécanisme de restauration automatique d'équilibre à deux roues, comprenant un cadre (1), dans lequel un tube vertical principal (11) est agencé de manière fixe à l'extrémité avant du cadre (1), une tige de guidon (12) est agencée en rotation dans le tube vertical principal (11), et des supports de roue avant (3) sont agencés symétriquement sur les deux côtés du tube vertical principal (11) ; et une barre d'équilibrage (6) est articulée entre le cadre (1) et chaque support de roue avant (3), la barre d'équilibrage (6) comprend un cylindre de piston (61) et une tige de piston (62), la tige de piston (62) est agencée de manière mobile dans une chambre de piston (63) du cylindre de piston (61), **caractérisé en ce que** deux extrémités de la chambre de piston (63) sont mutuellement interconnectées pour former un premier canal, une soupape de commande principale (64) est agencée sur le premier canal et divise le premier canal en une extrémité d'admission de milieu (65) et une extrémité de refoulement (66), un réservoir de milieu (41) est agencé à l'extrémité de refoulement (66), une pompe (42) est agencée au niveau de l'extrémité d'admission de milieu (65), et la pompe (42) est interconnectée avec le réservoir de milieu (41).

2. Mécanisme de restauration automatique d'équilibre à deux roues selon la revendication 1, dans lequel les extrémités de refoulement (66) des deux barres d'équilibrage (6) sont reliées au même réservoir de milieu (41) tandis que les extrémités d'admission de milieu (65) de celles-ci sont reliées à la pompe (42) respectivement via une soupape de remplissage gauche (43) et une soupape de remplissage droite (44).

3. Mécanisme de restauration automatique d'équilibre à deux roues selon la revendication 1, dans lequel un réservoir de stockage d'énergie (45) est agencé entre la soupape de remplissage gauche (43)/la soupape de remplissage droite (44) et la pompe (42), et un capteur de pression (46) est agencé sur le réservoir de stockage d'énergie (45).

4. Mécanisme de restauration automatique d'équilibre à deux roues selon la revendication 1, 2 ou 3, dans lequel la pompe (42) est entraînée par un moteur (47), et un clapet anti-retour (48) est agencé à une extrémité de sortie de liquide de la pompe.

5. Mécanisme de restauration automatique d'équilibre à deux roues selon la revendication 1, dans lequel le support de roue avant (3) comprend une tige principale (31), un siège rotatif (32) et un amortisseur (33), l'amortisseur (33) est agencé en rotation à l'extrémité inférieure de la tige principale (31) à travers le siège rotatif (32), le tube vertical principal (11) est respectivement articulé avec les tiges principales (31) à travers des ensembles de bras oscillants (2), un ensemble de direction (5) est agencée entre la tige de guidon (12) et chaque siège rotatif (32), et une roue avant (4) est agencée à l'extrémité inférieure de l'amortisseur (33).

6. Mécanisme de restauration automatique d'équilibre à deux roues selon la revendication 5, dans lequel l'ensemble de bras oscillant (2) comprend une pluralité de bras oscillants (21) et de premiers axes rotatifs (22), et deux extrémités du bras oscillant (21) sont respectivement agencées sur la tige principale (31) via le premier axe rotatif (22).

7. Mécanisme de restauration automatique d'équilibre à deux roues selon la revendication 6, dans lequel un groupe de bras oscillants symétriques (21) sont reliés de manière fixe à une plaque de liaison (23), et une biellette (24) est articulée entre les deux plaques de liaison (23).

8. Mécanisme de restauration automatique d'équilibre à deux roues selon la revendication 1 ou 5, dans lequel un composant rotatif principal (34) est articulé au niveau du bas de la tige de guidon (12), un composant rotatif secondaire (35) est articulé au niveau de chaque siège rotatif (32), et un bras de direction (36) est articulé entre le composant rotatif principal (34) et chaque composant rotatif secondaire (35).

9. Mécanisme de restauration automatique d'équilibre à deux roues selon la revendication 1, dans lequel la chambre de piston (63) et une chambre interconnectée (67) sont agencées dans le cylindre de piston (61), et les extrémités supérieures de la chambre de piston (63) et de la chambre interconnectée (67) sont mutuellement interconnectées via une soupape de commande principale normalement ouverte (64) tandis que les extrémités inférieures de celles-ci sont mutuellement interconnectées via un pore interconnecté (68).

10. Mécanisme de restauration automatique d'équilibre à deux roues selon la revendication 9, dans lequel la chambre de piston (63), une chambre intérieure de la soupape de commande principale (64), la chambre interconnectée (67) et le pore interconnecté (68) forment le premier canal, lorsque le véhicule roule normalement, la soupape de commande principale (64) est normalement ouverte, un milieu se déplace de manière aléatoire dans le premier canal, et la tige de piston (62) se déplace avec le mouvement de la roue avant correspondante ; lorsque le véhicule est incliné, la soupape de commande principale (64) est commandée pour être fermée, la tige de piston (62) est verrouillée de sorte qu'une structure de direction du véhicule soit verrouillée.

11. Système de restauration automatique d'équilibre à deux roues, dans lequel le système comprend le mécanisme de restauration automatique d'équilibre à deux roues selon l'une quelconque des revendications 1 à 10 et un système de commande, le système de commande comprend un module de commande principal et un module d'acquisition, le module d'acquisition comprend un capteur d'équilibre (49) agencé sur le cadre (1) et un capteur de vitesse.
